# EUROPEAN PATENT APPLICATION

(11) **EP 1 557 563 A1**
(43) Date of publication of application: **27.07.2005**
(21) Application number: 05100177.4
(22) Date of filing: 13.01.2005
(51) Int. Cl.: F03G 7/06, G12B 1/02

(54) **Device for activating firefighting systems such as smoke and/or heat vents, fire doors and the like**

(30) Priority: 21.01.2004 IT GE20040003
(71) Applicant: Gambardella, Valeria, 81010 Atrani (Salerno) (IT)
(72) Inventor: Gambardella, Valeria, 81010 Atrani (Salerno) (IT)
(74) Representative: Porsia, Attilio, Dr.

(57) **Abstract**

Device for activating systems controlled according to temperature variations in the environment, such as smoke and/or heat vents, fire doors, sunshades or the like, characterized in that the activating element used for the said devices is an element in the form of a wire, strip, bar, spring or the like, made from a shape memory alloy, which can undergo a contraction in its transformation from the martensitic to the austenitic phase due to its heating beyond a critical temperature, and which can resume its original shape, in other words can re-expand, when it returns from the austenitic to the martensitic phase as a result of its cooling. In particular, the said device is used for activating smoke venting systems.

## Description

The present invention relates to devices for activating systems which are controlled according to specific temperature variations in the environment, such as fire doors and the like, or ventilators for natural ventilation, sunshades, and the like. More particularly, although not exclusively, it relates to smoke and/or heat venting systems.

As is known, smoke and heat venting devices are used in the field of fire prevention in closed environments such as buildings, sheds, ships or the like, the devices being positioned on the walls and/or on the ceilings of these environments. If a seat of a fire develops, these venting devices must create a draught which is as nearly vertical as possible with respect to the seat of the fire. The purpose of this draught is to carry a large amount of high-temperature smoke to the outside, to prevent it from accumulating and falling to the level where persons are present. These vents not only decrease the thermal stress on the walls of the buildings in which they are placed, but also facilitate the evacuation of persons present in the building and the action of rescuers.

For similar reasons, such premises may be provided with fire doors or similar elements for compartmentalizing the premises.

These known elements are provided with various systems for activating them in case of emergency, in other words in case of a rise in temperature. Such systems comprise, for example, the use of a pneumatic cylinder provided with a piston activated by a valve unit regulated by a thermal activating device, such as a heat-sensitive vessel.

However, these known activating systems have various drawbacks: after the first operating cycle, the device has to be completely replaced; the correct operation of the device frequently depends on adequate maintenance, for example the periodic replacement of the heat-sensitive vessel and/or of the gas cartridges for the pneumatic cylinder; the activation of the device, if carried out by remote activating systems, could be compromised by the failure of such remote systems; and the resetting of the said devices to their initial position must be carried out manually.

The principal object of the present invention is therefore to provide a device for activating such systems which can overcome the drawbacks of the systems known at present.

According to a principal characteristic of the present invention, this object is achieved by using as the activating element of the said devices an element in the form of a wire, strip, spring, bar or the like, made from a shape memory alloy, which can undergo a contraction in its transformation from the martensitic to the austenitic phase due to its heating beyond a critical temperature, and which can resume its original shape, in other words can re-expand, when it returns from the austenitic to the martensitic phase as a result of its cooling.

Thus, by using this element made from a shape memory alloy it becomes advantageously possible to activate a fire safety device, such as a smoke venting device, without the aid of activating systems subject to failure or requiring frequent maintenance, and it is possible to avoid manual intervention for returning these elements to the initial condition at the time of resetting.

Further objects and advantages of the present invention will be made clear by the following description of a practical embodiment of the invention, provided solely by way of example and without restrictive intent, with reference to a smoke venting system illustrated in the attached drawings, in which:
Fig. 1 shows a perspective view from above of a smoke venting device according to the present invention; and
Fig. 2 shows an exploded perspective view of the system for opening and closing the venting device of Fig. 1.

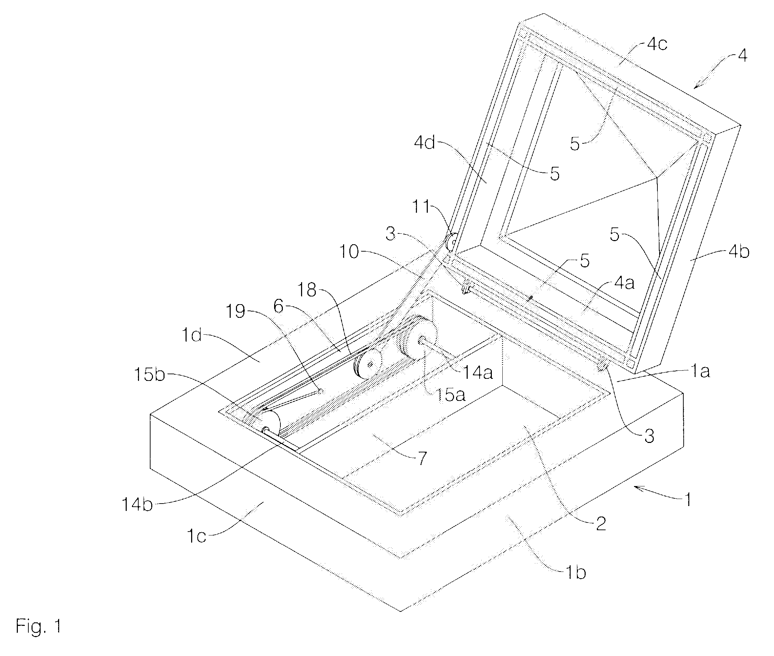

With reference to the drawings and with particular reference to Fig. 1, the number 1 indicates the frame of a smoke venting device. This frame 1 comprises four lateral walls 1 a, 1 b, 1 c and 1 d, which delimit a central aperture 2. On one of the lateral walls of this frame 1, for example the lateral wall 1a, there are provided two hinges for the fixing and rotation of a cover 4 for closing the vent 2.

This cover 4 has at its base a frame formed by the walls 4a, 4b, 4c and 4d. Each of these walls has a groove 5 on the side facing the frame. A first rectangular panel 6 is fixed on the inner part of the lateral wall 1d of the frame 1, while a second rectangular panel 7 is fixed at a certain distance from the said wall, between the lateral walls 1a and 1c. The system for opening and closing the cover 4 is contained between these panels 6 and 7.

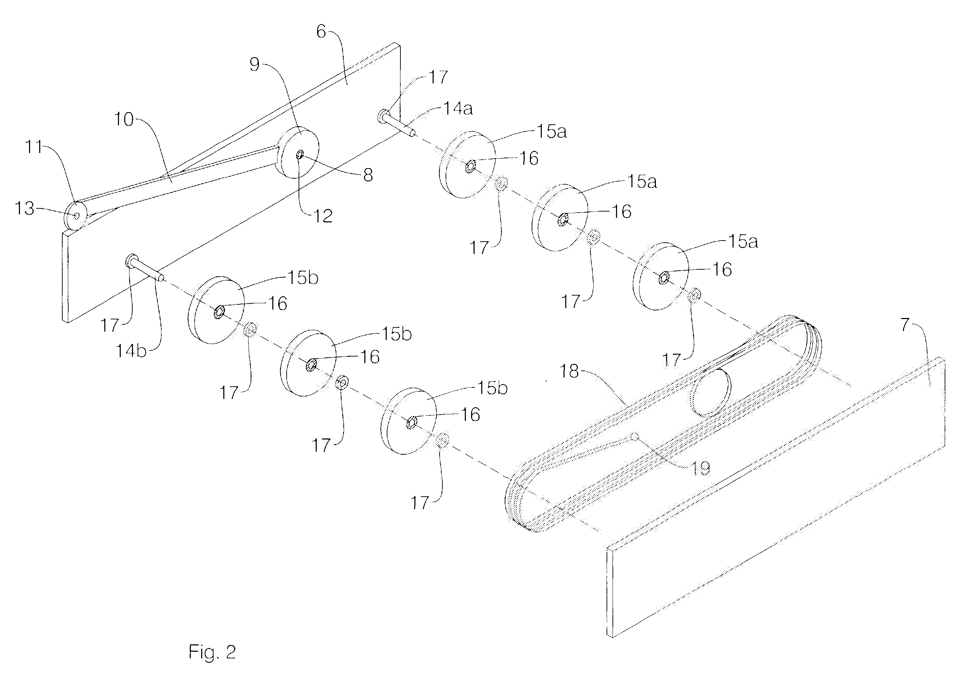

The various components of this system for opening and closing the cover 4 will now be described with reference to Fig. 2 of the attached drawings. A pulley 9 is fixed on the first panel 6 with the interposition of a plain bearing 8, the pulley mounted to rotate freely about a shaft 12 fixed to the panel 6. A lever 10 is fixed at one end to the pulley 9 and extends radially from it. At the other end of the lever 10, a wheel 11, which can engage in the groove 5 of the lateral wall 4d parallel and adjacent to the lateral wall 1d of the frame 1, is mounted by means of a shaft 13 to rotate freely. Additionally, two shafts 14a and 14b, on each of which a plurality of pulleys 15a and 15b is fitted (three pulleys in each row in the case illustrated), are fixed near the ends of the said first panel 6. These three pulleys 15a and 15b of each row are mounted to rotate freely about the corresponding shafts 14a and 14b by means of plain bearings 16. The three pulleys 15a and 15b of each row are spaced from each other and from the panel 6 by suitable spacers 17. A wire 18 made from a NiTi shape memory alloy runs between these two rows of pulleys 15a and 15b. This wire 18 is fixed at one end 19 to the first panel 6 and runs around the three sets of pulleys 15a-15b in succession and finally around the pulley 9. The other end of the said wire 18 is fixed to the said pulley 9 which carries the lever 10.

At ambient temperature, the wire 18 running around the said pulleys 15a, 15b and 9 is in the martensitic phase of its constituent alloy. If this wire 18 is heated beyond the temperature of transition to the austenitic phase, in other words approximately 68° in the case of NiTi alloy, it contracts, developing a considerable force. The degree of reduction of the initial length of the wire 18 can be, for example, 7-8%, and therefore, since the wire 18 runs around the said pulleys 15a, 15b and 9, there is a considerable reduction in the length of the wire 18, thus enabling the lever 10 to be rotated about the shaft 8 to such an extent that the cover 4 can be opened (and subsequently reclosed).

The operation of the venting device which has been described will be evident from the foregoing text. In the position in which the cover 4 of the device is positioned to close the smoke passage aperture 2, the lever 10 is lowered in the position of Fig. 2. In this situation, the shape memory alloy of the wire 18 is in the martensitic phase. When there is a significant rise in temperature to above the austenitic phase transformation temperature, in other words approximately 68°C, the wire 18 contracts, causing a degree of reduction of the length of the said wire 18. The force developed by the wire 18 during the contraction is considerable, and causes a clockwise rotation of the pulley 9 and consequently an upward rotation of the lever 10. This upward rotation of the said lever 10 causes the wheel 11 to run within the groove 5 formed in the lateral wall 4d and therefore causes the cover 4 to open to vent the heat and/or smoke.

Although the activating device according to the invention has been described in detail in its application to a smoke venting device, it could be used, for example, with a similar or equivalent arrangement of elements, for the automatic closing of fire doors or compartmentalizing shutters of mechanical systems, rather than for the opening of ventilators for natural ventilation or for the movement of sunshade elements or others. The means for opening and closing the moving elements, such as the cover 4 or doors or other types of hatch could also be different from the simple lever and pulley system described above, for example by using the shape memory alloy wire to activate more complicated levers, pistons, torsion bars or other elements.

The present invention is therefore not limited to the embodiments illustrated and/or described, but comprises all variants and modifications lying within the wider scope of the inventive concept, substantially as claimed below.

## Claims

1. Device for directly activating systems controlled according to temperature variations in the environment, such as smoke and/or heat vents, fire doors, sunshades or the like, **characterized in that** the activating element used for the said devices is an element in the form of a wire, strip, bar, spring or the like, made from a shape memory alloy, which can undergo a contraction in its transformation from the martensitic to the austenitic phase due to its heating beyond a critical temperature, and which can resume its original shape, in other words can re-expand, when it returns from the austenitic to the martensitic phase as a result of its cooling.

2. Device according to Claim 1, in which the said shape memory alloy is selected from the Ni-Ti or Cu-Zn-Al or Cu-Al-Ni alloys.

3. Device according to Claim 2, in which the said alloy is preferably a NiTi alloy, **characterized by** the presence of the intermetallic compound with an equiatomic composition, known as Nitinol.

4. Device for activating firefighting systems according to the preceding claims, for activating a smoke and/or heat venting system, comprising a frame (1) in which at least one aperture (2) is formed for the exit of smoke and/or heat and a cover (4) for closing the said aperture (2), **characterized in that** a set of pulleys (15a, 15b) is mounted to rotate freely on at least one lateral wall (1 d) of the said frame (1), a wire (18) made from a shape memory alloy being run around the said pulleys with a plurality of turns, one end of the said wire (18) being fixed to the said lateral wall (1 d) and the other end of the said wire (18) being fixed to at least one further pulley (9) mounted to rotate freely on the said lateral wall (1 d) and fixed to means (10) for opening and closing the said cover (4).

5. Device according to Claim 4, **characterized in that** two shafts (14a, 14b) extend orthogonally from the said lateral wall (1 d) to support two rows of pulleys (15a, 15b) around which the said wire (18) runs.

6. Device according to Claim 4, **characterized in that** the said means for opening and closing the said cover (4) comprise a lever (10) fixed at one end to the said pulley (9) and provided at its other end with
a wheel (11) which can run inside a groove (5) formed on a lateral wall (4d) of the cover (4).

7. Device for activating systems such as smoke and/or heat vents, fire doors and the like, according to any one of the preceding claims, substantially as described and illustrated.
